# EUROPEAN PATENT APPLICATION

(11) **EP 3 591 890 A1**
(43) Date of publication of application: **08.01.2020**
(21) Application number: 19174122.2
(22) Date of filing: 13.05.2019
(51) Int. Cl.: H04L 9/06

(54) **UNBREAKABLE DIGITAL TRANSMISSION**

(30) Priority: 04.07.2018 IT 201800006911
(71) Applicant: I&G Tech Sas Amadio Giancarlo & C., 20151 Milan (IT)
(72) Inventor: Amadio, Giancarlo, 20153 Milan (IT)
(74) Representative: Penza, Giancarlo

(57) **Abstract**

This is a new method that allows to have **unbreakable digital transmission**, it would change all actual communication methods, anymore communication interception or replication of information on internet server of data, all the transfer of digital data will be safe.

## Description

### a) TECHINCAL FIELD OF APPLICATION. : All digital transmissions.

### b) Description state of art.

All current cryptographic systems use a key and a logical algorithms to encrypt and decrypt data and that permit to every computer to analyze the algorithm and try to find a search key, in this way all the transmissions of data can be breakable.

### c) Description what the new method change.

I describe here a new method that allows to have **unbreakable digital transmission,** it would change all actual communication methods, anymore communication interception or replication of information on internet server of data, all the transfer of digital data will be safe.

The method is not a new system of encrypt or decrypt, it is only a new method to transfer the data in safe way, in way that the data cannot be read, hear or decrypted from persons or computers.

This method **don't use key and logical algorithms to encrypt and decrypt the data,** so it complete different from method used until today.

### Description of method:

**Step 1:** We need acquire a **unique, large enough, digital sequence of random data** that will be used to encrypt the data. (I call it DRS Digital Random Sequence).

We can do that by taking the digital random sequence (DRS) from the **real world,** every existing thing, every moment in the real world can be digitized in a unique digital sequence data.

We can do that with any digital device, which transforms real world data into digital data in this way we have a random digital sequence data that we can use, and we can do that in continue mode too.

The digital sequence data so created will be without a logical, it will be only unique random data.

**Step 2:** We must transfer the digital random sequence (DRS) to all person or all device with which we want exchange the data. We can use any method, we could use physical device example micro SD device or any communication system to do that, by internet or with other method of communication. Others person or system or machine could deliver the digital sequence (DRS) too.

**Step 3:** We must use the digital sequence as base to encrypt the data.

We can do that, for example, associating only one digital character of digital sequence at only one character of the information that we want encrypt, but however we could use others different way.

**Step 4:** After we have done this we can transfer only the positions of the digital random sequence (DRS) to the others person or device, in this way that we transfer in this step are only number of positions of the digital sequence (DSR). No information data will be transferred, but only positions data.

Nobody, no any computer will be able to decrypt the information in this step, because we haven't used a logical algorithm with a key, but we are transferring only a sequence of position of the file, so every things that is transferred is safe and unbreakable without the original digital sequence (DRS) that is the base to decrypt the data.

**Step 5:** Received the data, we must convert the position received in the data, so we must read in digital base (DRS) the corresponding position to have the data.

### Note:

During all transfer the information will be safe, nobody or computer will be able to decrypt or copy the data, because we have transferred only the positions number.

The original files that contains the digital sequence base (DSR) can be sent at end user with another tools, physical storage or manually in different period of time or delivery from third party.

In this way any information sent by internet, or any other way cannot be decrypt from any computers or person, unless you have the original digital natural sequence.

For sure the internal position of digital sequence would be used only one time, to avoid cycle that could generate a **logic** to decrypt the information.

We can use this method to store information encrypted on cloud, confidential documents, projects, wills. Keeping with us in a personal computer or in an external memory the digital natural sequence nobody or computer could be read that information in the cloud.

We can release, send or take the digital random sequence to read the information, only in that moment the information must be read.

The steps order can be changed, we could send before the positions and after the base file (DSR), it is not mandatory follow the steps in the order above descripted.

**No computer or being human in the world will be able to decrypt these information during the transfer,** because we transfer only positions number take from a digital random sequence build acquiring by any digital device in a **unique, large enough digital file** something taken from real world.

### d) Details Description of the invention claimed, using picture above

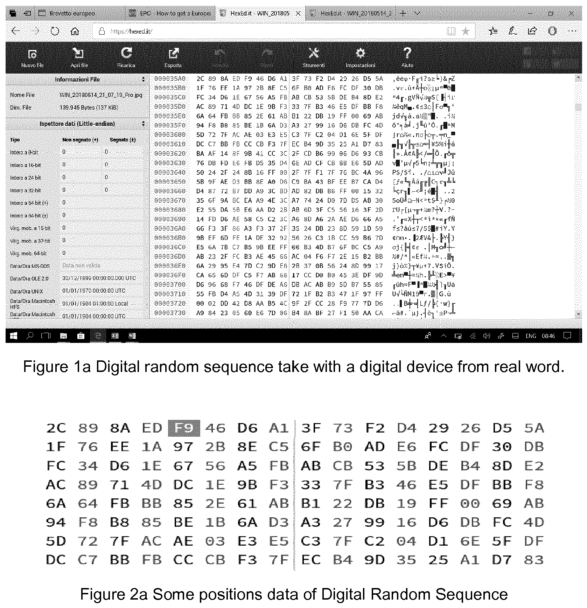

We can use the digital sequence take from a digital device to mapping the corresponding position and transfer information "HOME". example take that in figure 2a:

We have previously mapped every hexadecimal code and fixed that
- hexadecimal code F9 is equal to alphabetic char H
- hexadecimal code 29 is equal to alphabetic char O
- hexadecimal code 8E is equal to alphabetic char M
- hexadecimal code D6 is equal to alphabetic char E

So we find this hexadecimal code for the word "HOME" to:
- position 05 (hexadecimal code F9 = to alphabetic char H)
- position 13 (hexadecimal code 29 = to alphabetic char O)
- position 23 (hexadecimal code 8E = to alphabetic char M)
- position 07 (hexadecimal code D6 = to alphabetic char E)

We will transfer only the number of position of file 05, 13,23, 07 at a receiving point.

The receiving point will have a copy of our natural digital sequence and in this way it will able to decrypt the information
- 05 decrypt = F9 = H
- 13 decrypt = 29 = O
- 23 descript = 8E = M
- 07 decrypt = D6 = E

No any computer or being human in the world will be able to decrypt these information during the transfer, because these information have not been stored with a logical algorithm and we have not a decrypt key to find..

**e) APPLYING OF INVENTION** : All transmissions of digital data in any industrial sector

## Claims

1. The method to do unbreakable all transmissions, in which we use acquire a **unique, large enough, digital sequence of random data** that will be used as base to transmit the data in unbreakable way during the transmission, without use a logic with key and algorithm to encrypt and decrypted data, but only doing a mapping work with the unique random sequence in way to transfer digital positions and the unique random sequence.

2. The claims 1 **characterized by** to be realized with any digital device.

3. The claims 1 **characterized by** to be realized with any digital device and any digital unique sequences acquiring.

4. The claims 1 **characterized by** to be realized with any digital device and any digital unique sequences acquiring and transfer of positions numbers.

5. The claims 1 **characterized by** to be realized with any digital device and any digital unique sequences acquiring and the transfer of positions numbers, all online.

6. The claims 1 **characterized by** to be realized with any digital device and any digital unique sequences acquiring and the transfer of positions numbers, by internet.

7. The claims 1 **characterized by** to be realized with any digital device and any digital unique sequences acquiring and with transferring of digital random sequences by mobile phone.

8. The claims 1 **characterized by** to be realized with any digital device and any digital sequences acquiring and with transferring of digital random sequences by physical device.
